# EUROPEAN PATENT APPLICATION

(11) **EP 4 796 222 A2**
(43) Date of publication of application: **26.08.2026**
(21) Application number: 26182075.7
(22) Date of filing: 11.11.2024
(51) Int. Cl.: B03B 9/06

(54) **BATTERY CRUSHING METHOD AND BATTERY CRUSHING SYSTEM**

(30) Priority: 15.11.2023 TW 112144082
(62) Document number(s) of the earlier application(s) in accordance with Art. 76 EPC: 24212128.3 / 4 582 569
(71) Applicant: Batt. Cycle Materials Co., Ltd., Taichung City 407609 (TW)
(72) Inventor: CHEN, Peng, 407609 Taichung City (TW); LAI, Po-Nien, 407609 Taichung City (TW); CHAO, Chia-Yu, 407609 Taichung City (TW); CHANG, Chia-Lin, 407609 Taichung City (TW); CHEN, Yen-Chieh, 407609 Taichung City (TW)
(74) Representative: DREISS Patentanwälte PartG mbB

(57) **Abstract**

A battery crushing system for processing a battery includes a cryogenic electric discharge device, a conveying device disposed downstream of the cryogenic electric discharge device for conveying the battery, and a crushing device. The cryogenic electric discharge device includes a temperature controller for controlling a chamber temperature in a cooling chamber to thereby cool the battery that is kept in a gaseous environment inside the cooling chamber. The crushing device is disposed downstream of the conveying device for crushing the battery into a plurality of crushed particles. The temperature controller is a heat exchanger, and has a plurality of cooling tubes, and a supply member for supplying a liquid coolant to the cooling tubes, to thereby adjust the chamber temperature.

## Description

The disclosure relates to a processing method and a processing system for a battery, and more particularly to a battery crushing method and a battery crushing system.

With the rapid development of the economy, a number of batteries that are used has reached a record high year by year, and a number of discarded batteries has also gradually increased, accordingly. Therefore, how to deal with these discarded batteries has become an important issue. An inadequate disposal process may cause environmental pollution and waste of resources, which leads battery recycling to become a new industry.

In today's battery recycling industry, discarded batteries are usually crushed at the beginning of recycling method. However, if the discarded batteries are crushed without the residual electrical energy therein being discharged, the discarded batteries are prone to producing heat due to short circuit, which may lead to hazards such as combustion and explosion. Therefore, for safety reasons, the discarded batteries are usually discharged before being crushed.

At present, discarded batteries are usually immersed in a salt-containing liquid bath or a liquid nitrogen bath for cooling, which facilitates discharge of the discarded batteries. Taiwanese Invention Patent Application Publication No. 202107764A discloses a method for recovering lithium from discarded lithium ion batteries or parts thereof, which includes a step of discharging lithium ion batteries through immersing the same in a conductive liquid (which may include a metal salt aqueous solution such as a sodium sulfate aqueous solution) before crushing or cutting the lithium ion batteries in a mechanical manner. The crushing or cutting the lithium ion batteries may be performed in water, so as to prevent combustion or explosion.

However, the abovementioned methods for discharging batteries have drawbacks. For example, the method for discharging batteries through immersing the same in a salt-containing liquid bath may generate a large amount of waste water and waste gas, and may also damage valuable components of the batteries that are to be recycled, which is neither environmentally friendly nor economical. The method for discharging batteries through immersing the same in a liquid nitrogen bath may improve efficiency of discharge, but a large storage space for equipment is required, and installation of safety facilities around the equipment storing liquid nitrogen is also required, which increases processing cost.

Therefore, an object of the disclosure is to provide a battery crushing method that can alleviate at least one of the drawbacks of the prior art.

According to an aspect of the disclosure, there is provided a battery crushing system according to claim 1.

Other features and advantages of the disclosure will become apparent in the following detailed description of the embodiment(s) with reference to the accompanying drawings. It is noted that various features may not be drawn to scale.
Figure 1 is a schematic view illustrating an embodiment of a battery crushing system according to the disclosure.
Figure 2 illustrates a positional relationship between devices of the battery crushing system in Figure 1.
Figure 3 is a flow chart illustrating an embodiment of a battery crushing method according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

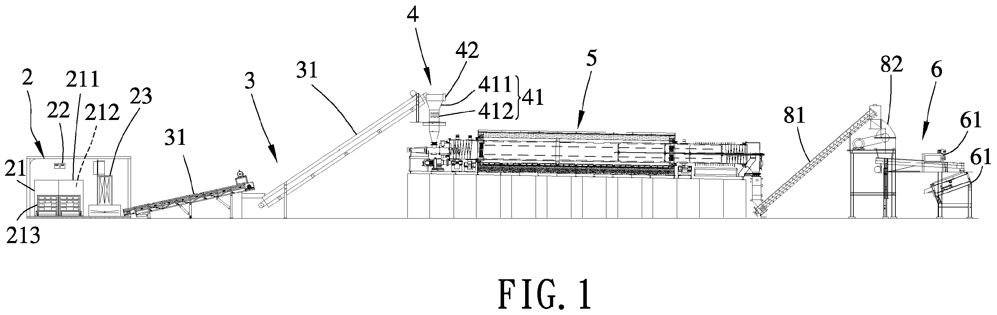

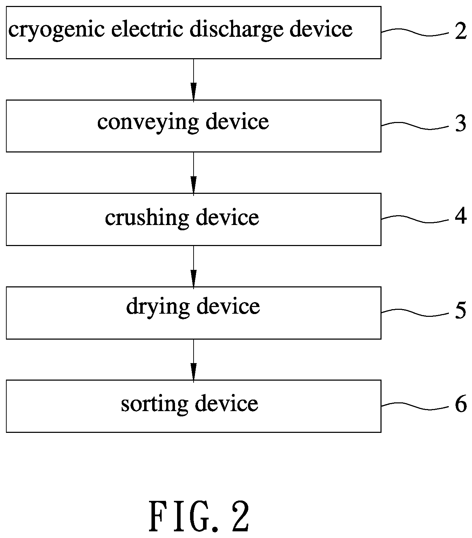

Referring to Figures 1 and 2, an embodiment of a battery crushing system according to the disclosure is used to process a battery that is to be discarded, and includes a cryogenic electric discharge device 2, a conveying device 3, a crushing device 4, a drying device 5 and a sorting device 6. In this embodiment, the battery is exemplified as a lithium ion battery.

The cryogenic electric discharge device 2 includes a cooling unit 21, a sensing unit 22 that is in signal connection with the cooling unit 21, and a puncturing unit 23.

The cooling unit 21 has a chamber body 211, a cooling chamber 212 defined by the chamber body 211 and for accommodation of the battery, and a temperature controller 213 for controlling a chamber temperature in the cooling chamber 212. The battery in the cooling chamber 212 is kept in a gaseous environment and is cooled by the temperature controller 213. In certain embodiment, the battery is cooled by the temperature controller 213 through a liquid-assisted air cooling technique. The sensing unit 22 is in signal connection with the temperature controller 213 of the cooling unit 21, and is configured to sense the chamber temperature in the cooling chamber 212 to thereby generate a temperature sensing signal. In this embodiment, the sensing unit 22 is exemplified as an infrared sensor. The temperature controller 213 is configured to adjust the chamber temperature in the cooling chamber 212 according to the temperature sensing signal that is received from the sensing unit 22 through signal connection therebetween.

In this embodiment, the temperature controller 213 is a heat exchanger which includes a plurality of cooling tubes (not shown) that are disposed on a sidewall of the chamber body 211, and a supply member (not shown) that is used for supplying a liquid coolant to the cooling tubes. The supply member is in signal connection with the sensing unit 22 for receiving the temperature sensing signal, so as to adjust a flow rate of the liquid coolant that is supplied to the cooling tubes according to the temperature sensing signal received from the sensing unit 22, to thereby adjust the chamber temperature in the cooling chamber 212.

The puncturing unit 23 is disposed between the cooling unit 21 and the conveying device 3 for puncturing the battery thus cooled by the cooling unit 21, to thereby discharge the battery.

In some embodiments, the puncturing unit 23 is disposed in the cooling chamber 212. When the battery is cooled to a predetermined battery temperature (i.e., an electric discharge temperature), or when the chamber temperature in the cooling chamber 212 is lowered to a predetermined chamber temperature, the puncturing unit 23 is allowed to puncture the battery to thereby discharge the battery.

The conveying device 3 is disposed downstream of the cooling unit 21 and the puncturing unit 23 for conveying the battery therefrom.

In this embodiment, the conveying device 3 includes a plurality of conveying belts 31 that are connected to each other as shown in Figure 1, but the disclosure is not limited to such.

The crushing device 4 is disposed downstream of the conveying device 3, and includes a crushing unit 41 and a temperature control unit 42.

The crushing unit 41 has a container 411 for receiving the battery that is conveyed from the puncturing unit 23 (in some embodiments, from the cooling unit 21) by the conveying device 3, and a crushing member 412 for crushing the battery into a plurality of crushed particles. The temperature control unit 42 is disposed in proximity to the container 411 for adjusting an internal temperature of the container 411.

In this embodiment, the temperature control unit 42 has a temperature sensor (not shown) for measuring the internal temperature of the container 411, and a nitrogen supply member (not shown) signally connected to the temperature sensor of the temperature control unit 42. In this embodiment, the temperature sensor of the temperature control unit 42 is exemplified as an infrared sensor. The nitrogen supply member adjusts an amount of nitrogen flowing into the container 411 according to a sensing result that is transmitted from the temperature sensor through signal connection therebetween, so as to control the internal temperature of the container 411, such that the battery in the container 411 may be crushed in a low temperature environment. In certain embodiment, the internal temperature of the container 411 may range from -10 °C to 10 °C and the battery in the container 411 is crushed at such low temperature.

The drying device 5 is disposed downstream of the crushing unit 41, is configured to perform a heat treatment for drying the crushed particles, so as to remove electrolyte solutions left on the crushed particles, and may be a dryer, desiccator or other heat treatment equipment.

The sorting device 6 is disposed downstream of the drying device 5, has at least one sorting unit 61, and is configured to, according to at least one of a particle size or a material property, sort the crushed particles from the drying device 5. The at least one sorting unit 61 may be a size selector, a magnetic separator, an eddy current sorting machine (which is used to separate non-ferrous metals), or a gravity separator. In this embodiment, the sorting device 6 has two sorting units 61. One of the sorting units 61 adjacent to the drying device 5 is a magnetic separator for sorting the crushed particles according to magnetism property, and the other one of the sorting units 61 disposed downstream of the one of the sorting units 61 is a size selector for sorting the crushed particles according to the particle size; however, the disclosure is not limited thereto.

In other embodiments, depending on different requirements, the sorting device 6 has one or more different types of sorting units 61, in order to sort the crushed particles according to at least one of a particle size or a material property.

In this embodiment, the battery crushing system further includes a conveyor belt 81 disposed downstream of the drying device 5, and a crushing machine 82 disposed between the conveyor belt 81 and the sorting device 6. The conveyor belt 81 is used to convey the crushed particles from the drying device 5 to the crushing machine 82. The crushing machine 82 is used to further crush the crushed particles, so as to ensure that particle sizes thereof meet the requirement.

It should be noted that in other embodiments, the conveyor belt 81 and the crushing machine 82 may be omitted, and the crushed particles from the drying device 5 are directly guided to the sorting device 6; however, the disclosure is not limited to such.

In the battery crushing system of the disclosure, the cooling unit 21 is used to cool the battery through keeping the same in the gaseous environment, so the chemicals such as a salt-containing liquid or liquid nitrogen is omitted, thus waste water may be reduced, and environmental pollution is prevented. Moreover, the battery is prevented from being polluted by the chemicals, which lowers the value of the battery being recycled. In addition, in the battery crushing system of the disclosure, compared to the prior art, there is no need to reserve a space for disposing equipment that stores a salt-containing liquid or liquid nitrogen; thus, cost for the space can be indeed reduced.

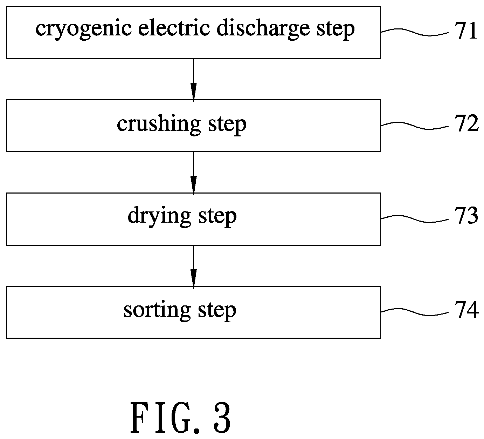

Referring to Figure 3 with reference to Figures 1 and 2, an embodiment of a battery crushing method according to the disclosure is performed using the aforementioned battery crushing system. The battery crushing method includes cooling and discharging a battery (i.e., a cryogenic electric discharge step 71), crushing the battery to form a plurality of crushed particles (i.e., a crushing step 72), drying the crushed particles (i.e., a drying step 73) and sorting the crushed particles (i.e., a sorting step 74).

In the cryogenic electric discharge step 71, the battery is kept in the gaseous environment, and is cooled to the electric discharge temperature using the cooling unit 21, and then, the battery is discharged using the puncturing unit 23. The electric discharge temperature refers to a surface temperature of the battery, and ranges from -60 °C to 0 °C; in some embodiments, the electric discharge temperature ranges from -40 °C to -20 °C. In this embodiment, cooling the battery is conducted using the liquid-assisted air cooling technique. Specifically, the liquid coolant is supplied to the cooling tubes of the temperature controller 213 that are disposed on the sidewall of the chamber body 211 through the supply member, such that heat in the chamber body 211 (i.e., the cooling chamber 212) may be dissipated through the liquid coolant in the cooling tubes, and the battery kept in the gaseous environment in the cooling chamber 212 is thereby cooled to the electric discharge temperature.

When the battery is cooled to the electric discharge temperature, the battery is prevented from burning due to a large amount of heat generated during the subsequent crushing step 72, thereby enhancing the safety of the battery in the crushing step 72.

Afterwards, the conveying device 3 is used to convey the battery from the cryogenic electric discharge device 2 to the crushing device 4; specifically, the battery is guided to the container 411 of the crushing device 4. In the crushing step 72, the container 411 is controlled at a crushing temperature using the temperature control unit 42, such that the battery is to be crushed at such low temperature. The crushing temperature is not greater than a temperature ranging from -10 °C to 10 °C. The battery is crushed using the crushing member 412 to form a plurality of crushed particles. A particle size of each of the crushed particles may range from 1 cm to 2 cm. Since the battery from the cryogenic electric discharge device 2 is crushed at such low temperature environment, the battery is prevented from burning due to a large amount of heat generated in the crushing step 72.

In this embodiment, in the crushing step 72, the crushing temperature ranges from -10 °C to 10 °C.

The drying device 5 is used to perform the drying step 73. In the drying step 73, the crushed particles are dried through a heat treatment, so as to remove an electrolyte solution left on the crushed particles.

The sorting device 6 is used to perform the sorting step 74. In the sorting step 74, the crushed particles, which are dried in the drying step 73, are sorted according to at least one of a particle size or a material property. Specifically, in this embodiment, the one of the sorting units 61 of the sorting device 6 adjacent to the drying device 5 may be the magnetic separator, and is used to sort the crushed particles from the drying device 5 according to magnetism property, and the other one of the sorting units 61 disposed downstream of the one of the sorting units 61 may be the size selector, and is used to sort the crushed particles according to the particle size.

In other embodiment, the sorting units 61 used in the sorting step 74 may come in various types, depending on different requirements. For example, each of the sorting units 61 may be an eddy current sorting machine or a gravity separator.

It should be noted that, in this embodiment, between the drying step 73 and the sorting step 74, the crushing machine 82 is used to further crush the crushed particles delivered from the drying device 5, so as to ensure that particle sizes thereof meet the requirement (i.e., the particle sizes thereof range from 1 cm to 2 cm).

In the following examples and comparative example, seven lithium ion batteries are subjected to the cryogenic electric discharge step 71 and the crushing step 72 using the battery crushing system. An infrared sensor is used to sense an initial surface temperature T11 (i.e., the electric discharge temperature) and an initial internal temperature T12 of each of the lithium ion batteries before the crushing step 72, a maximum surface temperature T21 and a maximum internal temperature T22 of each of the lithium ion batteries during the crushing step 72, and a particle temperature T3 of the crushed particles of each of the lithium ion batteries after the crushing step 72. The initial internal temperature T12 and the maximum internal temperature T22 respectively refer to temperatures within each of the lithium ion batteries before and during the crushing step 72.

### [EXAMPLES 1-6]

In the cryogenic electric discharge step 71, six lithium ion batteries were disposed in the cooling unit 21 and were kept in a gaseous environment, followed by cooling the six lithium ion batteries to the electric discharge temperatures (i.e., 0 °C, -10 °C, -20 °C, -30 °C, -40 °C and -60 °C), respectively. Then, the lithium ion batteries were further discharged by puncturing using the puncturing unit 23. Next, in the crushing step 72, the six lithium ion batteries were crushed into crushed particles using the crushing unit 41 under a crushing temperature ranging from -10 °C to 0 °C. An infrared sensor (Model No.: Ti480 PRO, Manufacturer: Fluke^{®}) was used to sense an initial surface temperature T11 and an initial internal temperature T12 of each of the lithium ion batteries before the crushing step 72, a maximum surface temperature T21 and a maximum internal temperature T22 of each of the lithium ion batteries during the crushing step 72, and a particle temperature T3 of the crushed particles of each of the lithium ion batteries after the crushing step 72. The temperatures for each of the lithium ion batteries are listed in Table 1.

### [COMPARATIVE EXAMPLE]

In the comparative example, a lithium ion battery was similarly subjected to the cryogenic electric discharge step 71 and the crushing step 72, except that in the cryogenic electric discharge step 71, the lithium ion battery was cooled to an initial surface temperature T11 of 10 °C. An initial surface temperature T11 and an initial internal temperature T12 before the crushing step 72, a maximum surface temperature T21 and a maximum internal temperature T22 during the crushing step 72, and a particle temperature T3 of the crushed particles after the crushing step 72 were also measured and listed in Table 1.

**Table 1**

| | T11(°C) | T12(°C) | T21(°C) | T22(°C) | T3(°C) |
|---|---|---|---|---|---|
| Example 1 | 0 | 10 | 40-45 | 80-85 | 38 |
| Example 2 | -10 | 6 | 50-55 | 70-75 | 38.5 |
| Example 3 | -20 | 0 | 40-45 | 60-65 | 38 |
| Example 4 | -30 | -1 | 30-35 | 60-65 | 38.2 |
| Example 5 | -40 | -25 | 20-25 | 50-55 | 39 |
| Example 6 | -60 | -20 | 10-15 | 40-45 | 38 |
| Comparative Example | 10 | - | Burning | | |

As shown in Table 1, in the comparative example, the initial surface temperature T11 of the lithium ion battery was 10 °C before the lithium ion battery was punctured and crushed, and a great amount of heat was generated during the crushing step 72, which led to ignition. In the examples 1 to 6, surfaces of the lithium ion batteries were cooled to the initial surface temperatures T11 ranging from -60 °C to 0 °C, before the lithium ion batteries were punctured and crushed; in the crushing step 72, the maximum internal temperatures T22 of the lithium ion batteries were not greater than 90 °C, the maximum surface temperatures T21 of the lithium ion batteries were not greater than 60 °C, and no burning occurred. It can be seen that in the cryogenic electric discharge step 71, as long as the initial surface temperature T11 (i.e., the electric discharge temperature) of the lithium ion battery is not greater than 0 °C, combustion of the lithium ion battery in the crushing step 72 can be prevented, which is advantageous for improving the safety of the entire process.

To sum up, in the battery crushing system of the disclosure, the battery is cooled to the electric discharge temperature (ranging from -60 °C to 0 °C) in the gaseous environment using the cooling unit 21, such that the battery is prevented from burning due to a large amount of heat generated during the crushing step 72, which ensures safety during the entire process. In addition, compared to the prior art, the chemicals such as a salt-containing liquid or liquid nitrogen is omitted in this disclosure; hence, waste water may be greatly reduced and environmental pollution may be prevented. Moreover, there is no need to reserve a space for disposing equipment that stores the salt-containing liquid or liquid nitrogen, so cost for the space can be reduced.

The following numbered clauses may illustrate one or more examples of this disclosure.

Clause 1. A battery crushing method, comprising: cooling a battery, which is kept in a gaseous environment, to an electric discharge temperature ranging from -60 °C to 0 °C; and after cooling, crushing the battery at a crushing temperature to form a plurality of crushed particles, the crushing temperature being not greater than a temperature ranging from -10 °C to 10 °C.

Clause 2. The battery crushing method of clause 1, wherein the electric discharge temperature ranges from -40 °C to -20 °C, and a particle size of each of the crushed particles ranges from 1 cm to 2 cm.

Clause 3. The battery crushing method of clause 1 or 2, further comprising, after cooling and before crushing the battery, discharging the battery.

Clause 4. The battery crushing method of clause 3, wherein discharging the battery is conducted by puncturing the battery.

Clause 5. The battery crushing method of any one of clauses 1 to 4, further comprising, after crushing the battery, drying the crushed particles through a heat treatment, so as to remove an electrolyte solution left on the crushed particles, and sorting the crushed particles according to at least one of a particle size or a material property.

Clause 6. The battery crushing method of any one of clauses 1 to 5, wherein the step of cooling the battery is conducted using a liquid-assisted air cooling technique.

Clause 7. The battery crushing method of any one of clauses 1 to 6, wherein, in the step of cooling the battery, the battery is kept in the gaseous environment inside a cooling chamber, and is cooled using a temperature controller that includes a plurality of cooling tubes disposed on a sidewall of a chamber body defining the cooling chamber, and a supply member used for supplying a liquid coolant to the cooling tubes.

Clause 8. A battery crushing system for processing a battery, comprising: a cryogenic electric discharge device including a cooling unit, and a sensing unit that is in signal connection with the cooling unit, the cooling unit having a cooling chamber for accommodation of the battery, and a temperature controller for controlling a chamber temperature in the cooling chamber to thereby cool the battery that is kept in a gaseous environment inside the cooling chamber, the sensing unit being configured to sense the chamber temperature in the cooling chamber to thereby generate a temperature sensing signal, the temperature controller being configured to adjust the chamber temperature in the cooling chamber according to the temperature sensing signal that is received from the sensing unit through the signal connection therebetween; a conveying device disposed downstream of the cooling unit for conveying the battery from the cooling unit; and a crushing device disposed downstream of the conveying device, and including a crushing unit and a temperature control unit, the crushing unit having a container for receiving the battery that is conveyed from the cooling unit by the conveying device, and a crushing member for crushing the battery into a plurality of crushed particles, the temperature control unit being disposed in proximity to the container for adjusting an internal temperature of the container.

Clause 9. The battery crushing system of clause 8, wherein the cryogenic electric discharge device further includes a puncturing unit disposed between the cooling unit and the conveying device for puncturing the battery thus cooled, to thereby discharge the battery.

Clause 10. The battery crushing system of clause 8 or 9, further comprising a drying device disposed downstream of the crushing unit, and a sorting device disposed downstream of the drying device, the drying device being configured to perform a heat treatment for drying the crushed particles, so as to remove an electrolyte solution left on the crushed particles, the sorting device having at least one sorting unit and being configured to sort the crushed particles from the drying device according to at least one of a particle size or a material property.

Clause 11. The battery crushing system of clause 10, wherein the at least one sorting unit is a size selector, a magnetic separator, an eddy current sorting machine, or a gravity separator.

Clause 12. The battery crushing system of any one of clauses 8 to 11, wherein the cooling chamber is defined by a chamber body, the temperature controller being a heat exchanger, and having a plurality of cooling tubes that are disposed on a sidewall of the chamber body, and a supply member that is used for supplying a liquid coolant to the cooling tubes, the supply member being in signal connection with the sensing unit for receiving the temperature sensing signal, so as to adjust a flow rate of the liquid coolant that is supplied to the cooling tubes according to the temperature sensing signal received from the sensing unit, to thereby adjust the chamber temperature.

Clause 13. The battery crushing system of any one of clauses 8 to 12, wherein the battery is cooled by the temperature controller through a liquid-assisted air cooling technique.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A battery crushing system for processing a battery, **characterized by**:
a cryogenic electric discharge device (2) including a cooling unit (21), and a sensing unit (22) that is in signal connection with said cooling unit (21), said cooling unit (21) having a cooling chamber (212) for accommodation of the battery, and a temperature controller (213) for controlling a chamber temperature in said cooling chamber (212) to thereby cool the battery that is kept in a gaseous environment inside said cooling chamber (212), said sensing unit (22) being configured to sense the chamber temperature in said cooling chamber (212) to thereby generate a temperature sensing signal, said temperature controller (213) being configured to adjust the chamber temperature in said cooling chamber (212) according to the temperature sensing signal that is received from said sensing unit (22) through the signal connection therebetween;
a conveying device (3) disposed downstream of said cooling unit (21) for conveying the battery from said cooling unit (21); and
a crushing device (4) disposed downstream of said conveying device (3), and including a crushing unit (41) and a temperature control unit (42), said crushing unit (41) having a container (411) for receiving the battery that is conveyed from said cooling unit (21) by said conveying device (3), and a crushing member (412) for crushing the battery into a plurality of crushed particles, said temperature control unit (42) being disposed in proximity to said container (411) for adjusting an internal temperature of said container (411)
wherein said cooling chamber (212) is defined by a chamber body (211), said temperature controller (213) being a heat exchanger, and having a plurality of cooling tubes that are disposed on a sidewall of said chamber body (211), and a supply member that is used for supplying a liquid coolant to said cooling tubes, said supply member being in signal connection with said sensing unit (22) for receiving the temperature sensing signal, so as to adjust a flow rate of the liquid coolant that is supplied to said cooling tubes according to the temperature sensing signal received from said sensing unit (22), to thereby adjust the chamber temperature.

2. The battery crushing system as claimed in claim 1, said sensing unit (22) is an infrared sensor.

3. The battery crushing system as claimed in any one of claims 1 and 2, wherein said cryogenic electric discharge device (2) further includes a puncturing unit (23) disposed between said cooling unit (21) and said conveying device (3) for puncturing the battery thus cooled, to thereby discharge the battery.

4. The battery crushing system as claimed in any one of claims 1 to 3, further comprising a drying device (5) disposed downstream of said crushing unit (41), and a sorting device (6) disposed downstream of said drying device (5), said drying device (5) being configured to perform a heat treatment for drying the crushed particles, so as to remove an electrolyte solution left on the crushed particles, said sorting device (6) having at least one sorting unit (61) and being configured to sort said crushed particles from said drying device (5) according to at least one of a particle size or a material property.

5. The battery crushing system as claimed in claim 4, wherein said at least one sorting unit (61) is a size selector, a magnetic separator, an eddy current sorting machine, or a gravity separator.

6. The battery crushing system as claimed in claim 4, wherein said battery crushing system further includes a conveyor belt (81) disposed downstream of said drying device (5), and a crushing machine (82) disposed between said conveyor belt (81) and said sorting device (6).

7. The battery crushing system as claimed in any one of claims 1 to 6, wherein the battery is cooled by said temperature controller (213) through a liquid-assisted air cooling technique.

8. The battery crushing system as claimed in any one of claims 1 to 7, wherein said temperature control unit (42) has a temperature sensor for measuring the internal temperature of said container (411), and a nitrogen supply member signally connected to said temperature sensor of said temperature control unit (42).

9. The battery crushing system as claimed in claim 8, wherein said temperature sensor of said temperature control unit (42) is an infrared sensor.

10. The battery crushing system as claimed in any one of claims 8 and 9, wherein said nitrogen supply member adjusts an amount of nitrogen flowing into said container (411) according to a sensing result that is transmitted from said temperature sensor of said temperature control unit (42) through signal connection therebetween, so as to control the internal temperature of said container (411).
